# EUROPEAN PATENT APPLICATION

(11) **EP 4 800 665 A1**
(43) Date of publication of application: **02.09.2026**
(21) Application number: 25161159.6
(22) Date of filing: 28.02.2025
(51) Int. Cl.: G06V 20/56

(54) **LEARNABLE TRACKING MODEL**

(71) Applicant: NXP B.V., 5656 AG Eindhoven (NL)
(72) Inventor: Ibrahim, Mustafa Fuad Rifet, Hamburg (DE); Broertjes, Kevin, Hamburg (DE); Jespers, Frieder, Hamburg (DE)
(74) Representative: Schwarzweller, Thomas

(57) **Abstract**

The disclosure relates to methods of training an object detecting and tracking model. The object detecting or tracking model is trained by receiving (S201) location telemetry data transmitted by an object within the field of view and receiving (S203) sensor data from a sensor and derives object data therefrom. The object detecting and tracking model derives the ground truth from the location telemetry data and uses that to train the model. The disclosure further discusses related systems

## Description

### FIELD

The present specification relates to a method of training an object tracking model, a method of tracking objects using a tracking model, and related systems.

### BACKGROUND

Smart (or intelligent) intersections are intersections that use technology to, for example, improve traffic flow and safety. Smart intersections use sensors to collect and analyse data in real time, some use cases include optimising traffic light timing, emergency vehicle prioritisation, and vehicle collision prevention.

A fundamental underpinning element of smart intersections are camera-based object tracking models that can track objects that are participants in the intersection, such as cars, trucks, or buses. Such models require a large amount of labelled data to train the model using supervised learning.

Creating and maintaining a dataset with such labelled data takes a lot of effort especially considering the privacy regulations at public infrastructure which add complexity in terms of data anonymization. Additionally, recording data from one intersection or vehicle might not be sufficient for the machine learning models to generalize over a wide variety of scenarios such that expensive data recording and labelling is necessary for many different traffic scenarios to achieve a good performance. Furthermore, corner cases such as occlusion problems or varying lighting conditions might appear during operation of the perception system which have not been covered by the recorded data for training and which might lead to performance degradations of the machine learning models.

It is therefore an aim of the present disclosure to address these issues.

### SUMMARY

According to a first aspect of the present disclosure there is provided a computer-implemented method of training an object detecting or tracking model. The object detecting or tracking model is configured to receive sensor data from a sensor and detect or track an object within a field of view of the sensor based on the sensor data. The method comprises:
receiving location telemetry data transmitted by an object within the field of view;
receiving sensor data from the sensor;
training the object detecting or tracking model, comprising:
   detecting or tracking the object in the field of view based on the sensor data using the object detecting or tracking model to obtain object data;
   comparing the object data with the location telemetry data to determine a loss;
   updating the object detecting or tracking model based on the loss.

The object detecting or tracking model may be configured to detect an object, track an object, or detect and track an object. Detecting an object may mean identifying a bounding box in sensor data around where said object is located. A bounding box may be a rectangular bounding box, a rotated bounding box, or a specific shape of an object. The skilled person would recognise that alternative shapes for a bounding box are equally envisaged. Tracking an object may mean identifying a plurality of bounding boxes across a plurality of sequentially obtained frames of sensor data and linking said plurality of bounding boxes when they correspond to the same object moving through the plurality of sequentially obtained frames of sensor data. The object may be a vehicle including but not limited to a car, a truck, a bicycle, or a motorbike. The object may be any road-faring vehicle. The object may be a mobile phone of a pedestrian or driver. The field of view of the sensor may comprise a portion of a road. The field of view may comprise a portion of an intersection in a road. Alternatively, the field of view may comprise a portion of a highway or a portion of a generic street. The sensor may comprise a RGB and/or IR camera, a radar camera, and/or a lidar camera. The location telemetry data may be transmitted via ultra-wideband (e.g. IEEE 802.15.4z) and/or vehicle-to-everything, V2X (e.g. IEEE 802.11p). Alternatively, or in conjunction, cellular V2X can be used to transmit the location telemetry data using 3GPP standardised 4G LTE or 5G mobile cellular connectivity. Location telemetry data may comprise speed and/or location of the object. Location telemetry data may comprise latitude and/or longitude of the object. Location telemetry data may comprise a bearing and a distance from the sensor or any other fixed or known point proximal to the sensor.

The sensor may comprise at least one of: a camera, a lidar, and a radar. The skilled person will recognise that alternative sensors or imaging systems may equally be used.

The location telemetry data may be obtained from at least one of: satellite navigation and/or ultra-wideband impulse radio ranging. In some embodiments, the ultra-wideband impulse radio ranging may be combined with inertial measurements.

The method may further comprise transforming the location telemetry data into sensor coordinates based on the location and orientation of the sensor.

Sensor coordinates may be coordinates within an image obtained by the sensor. Transforming the location telemetry data into sensor coordinates may mean identifying location telemetry data with where in the image the object that obtained the location telemetry data is located.

Detecting or tracking the object in the field of view may further comprise estimating object position, object speed, object acceleration, object size, and/or object direction.

Estimating object position, speed, acceleration, object size, and/or direction may comprise: transforming the object data from sensor coordinates to bird's eye view coordinates; estimating the position, speed, acceleration, size, and/or direction of the object based on the transformed object data.

Sensor coordinates may mean coordinates relating to where the object data is in the sensor data. Bird's eye view coordinates may mean coordinates relating to where the object data is if the sensor were located directly above the junction and oriented perpendicularly thereto.

Sensor data may be associated with location telemetry data using clock synchronisation. Associating sensor data with location telemetry data may mean linking or indexing for further linking sensor data that was obtained at the same or similar time as the location telemetry data. Using clock synchronisation may mean labelling metadata of the sensor data and/or location telemetry data with the time at which it was obtained.

The computer-implemented method may be repeated at a pre-determined frequency, such as at least once per second. The computer-implemented method may be repeated at a rate given by the frame rate of the sensor. The computer-implemented method may be repeated until the loss reaches below a pre-determined threshold.

According to a second aspect of the present disclosure, there is provided a computer-implemented method of detecting and tracking an object within a field of view of a sensor. The method comprises receiving sensor data from the sensor; and detecting and tracking the object using an object detecting and tracking algorithm trained using the computer-implemented method of the first aspect to obtain object data.

Detecting and tracking the object may comprise at least one of estimating object position, object speed, object acceleration, object size, and/or object direction estimation.

Detecting and tracking an object may further comprise receiving location telemetry data from said object, comparing the object data to the location telemetry data to determine a loss. If the loss is above a pre-defined threshold, the method may further comprise training the object detection and tracking model in accordance with the first aspect of this disclosure.

According to a third aspect of the present disclosure, there is provided an object detecting and tracking system. The system comprises a sensor receiver configured to receive sensor data from a field of view of the sensor, a location telemetry data receiver configured to receive location telemetry data from an object, and one or more processors. The one or more processors are configured to detect and track the object in the field of view based on the sensor data using an object detecting and tracking model to obtain object data; compare the tracking data with the location telemetry data to determine a loss; and update the object tracking model based on the loss.

The one or more processors are configured to execute the method according to either of the first and/or second aspects of the present disclosure.

The system may further comprise at least one sensor configured to collect sensor data from the field of view of the sensor and transmit the sensor data to the sensor receiver.

The system may further comprise an object data transceiver configured to transmit the object data to an external entity.

The sensor may comprise a least one of a camera, a radar, and/or a lidar. The telemetry data may be obtained from at least one of: satellite navigation, ultra-wideband impulse radio ranging. Inertial measurement may be used when in conjunction with ultra-wideband impulse radio ranging.

According to a fourth aspect of the present disclosure, there is provided a non-transient machine readable medium comprising instructions for configuring one or more processors to perform the steps of any one of the first and/or second aspects.

### BRIEF DESCRIPTION OF DRAWINGS

Embodiments will be described, by way of example only, with reference to the drawings, in which:
Figure 1 is a bird's eye view of a smart intersection;
Figure 2 is a schematic flow diagram of a method of training an object detecting and tracking model; and
Figure 3 is a schematic diagram of an object detection and tracking system.

It should be noted that the figures are diagrammatic and not drawn to scale. Relative dimensions and proportions of parts of these figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

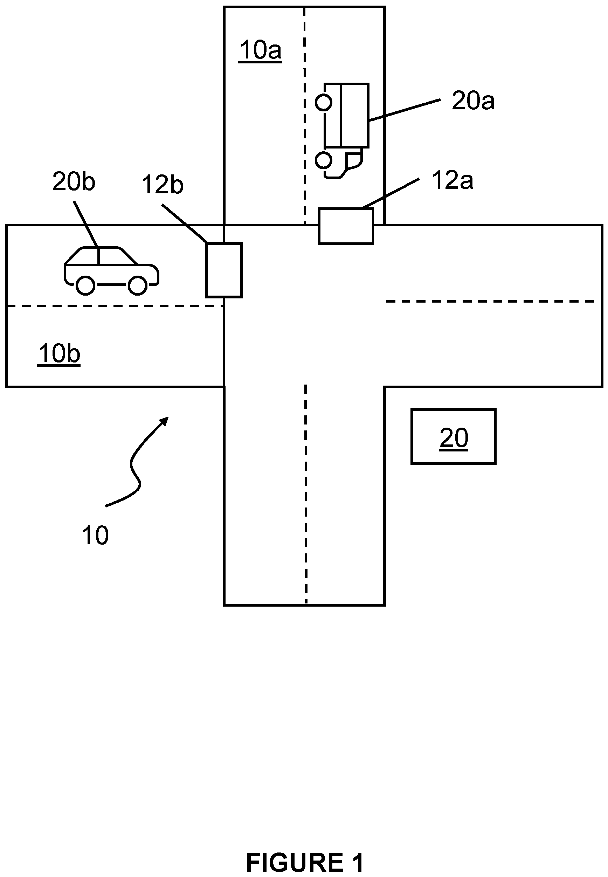

Figure 1 shows a bird's eye view of a smart intersection 10. The smart intersection in this instance comprises two intersecting roads 10a, 10b, a pair of traffic lights 12a, 12b, and a perception system 20. In the present Figure 1, there are two vehicles 20a, 20b at the smart intersection 10, however it is equally envisaged that there could be more or fewer vehicles at the smart intersection 10. In some embodiments, the perception sensor 20 is located in alternative locations such as on traffic light posts. The skilled person would recognise that any location proximal to the smart intersection 10 with sufficient visibility is equally envisaged, and the specific location of the perception sensor 20 is not limiting. In some embodiments, the smart intersection 10 is a portion of a highway or any other street situation.

The perception system 20 uses (a) camera-based sensor(s) to obtain sensor data to track the vehicles 20a, 20b provided they are within the field of view of the sensors of the perception system 20. The sensor data is processed by an object detecting and tracking model to obtain object data. The object data can then be processed and used to control the traffic lights 12a, 12b. The present example of usage of object data is merely exemplary and should not be construed as limiting, other uses are equally envisaged.

Vehicles 20a, 20b may be equipped with Vehicle-to-everything (V2X) communication technology (IEEE 802.11p) which enables vehicles 20a, 20b to transmit location telemetry data to the perception system 20 and/or other vehicles in the area. In turn, the perception system 20 is equipped with a V2X transceiver. Alternatively or simultaneously, mobile devices (e.g., smartphone, smartwatch, or bike with UWB unit) within vehicles 20a, 20b may be equipped with ultra-wideband (UWB) ranging and an inertial measurement unit (IMU). In such embodiments, the perception system 20 is equipped with a UWB ranging transceiver. Vehicle data can include GPS based geolocation, vehicle ID, vehicle type, vehicle speed, vehicle direction, and objects detected by any sensor systems of the vehicle, collectively referred to as location telemetry data.

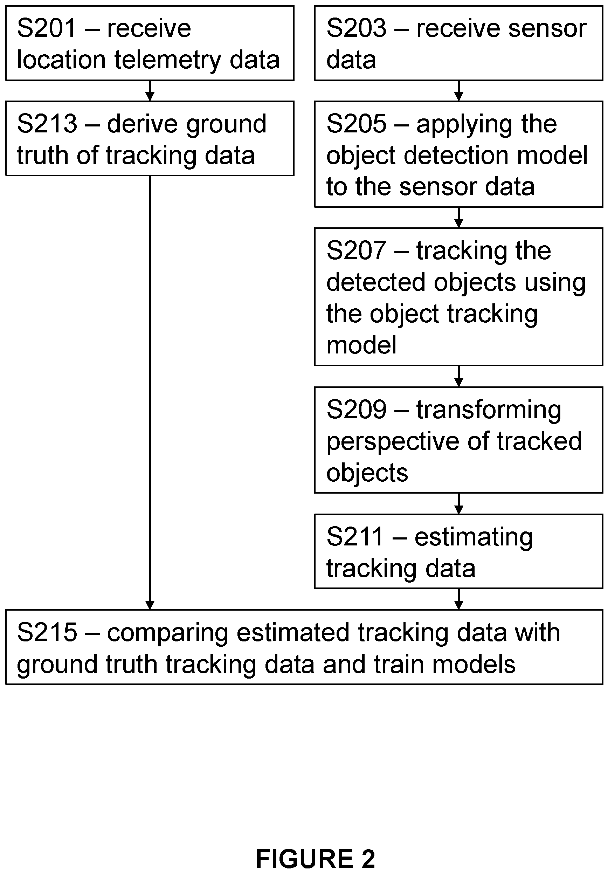

Turning to Figure 2, there is shown a schematic flow diagram of a method of training an object detecting and tracking model in accordance with the present disclosure. Figure 2 is described with respect to detecting and tracking objects, in some embodiments, these objects are vehicles such as vehicle 20a, 20b described with respect to Figure 1.

At S201, the object detecting and tracking model receives location telemetry data transmitted by an object within the field of view of the perception system via a V2X and/or a UWB transceiver. Where there are a plurality of objects having V2X and/or UWB capabilities, the sensor can receive a plurality of location telemetry data. The location telemetry data in the present embodiment comprises GPS geolocations, object speed, object direction, object type, object ID, and GPS timestamp.

At S203, the object tracking model receives sensor data from the sensor of the perception system. In the present embodiment, sensor data comprises an image from a (RGB) camera located proximal to the perception system. However, in alternative embodiments, the sensor may comprise an infrared camera, a radar subsystem, and/or a lidar subsystem. The image comprises at least a portion of the intersection 10. In some embodiments, the sensor data comprises a plurality of images, i.e., frames, taken consecutively by the sensor. The sensor assigns the sensor data a sensor timestamp indicating the time at which the sensor data was acquired.

At S205, an object detection model is applied to the sensor data to detect objects, such as vehicles, present at the intersection 10. The object detection model uses a trainable machine learning model such as a neural network to identify objects in the image and position information about each object identified. In some embodiments, at least one of the following may be identified for each object: a bounding box, a centroid, a size (e.g. an area), and a shape. In some embodiments, the object detection uses models such as YOLO, Faster R-CNN, or EfficientDet, however any object detection model can equally be used. Each detected object is assigned an object ID.

At S207, the position data (e.g. bounding box) for objects and object IDs are passed to an object tracking model which tracks the objects within the field of view of the sensor over time, i.e. across subsequent image frames. The object tracking model then links object IDs across frames allowing for the position of the plurality of objects to be tracked over time. In the present embodiment, the object tracking model is provided by a trainable machine learning model such as a neural network, a convolutional neural network, or any appropriate tunable tracking algorithm.

At S209, the plurality of frames along with the data derived at S207 is passed through a perspective transformation model. The perspective transformation model in this example embodiment is a static algorithm (i.e. is not trainable). In some embodiments the parameters of the perspective transformation may also be trainable (but may be locked once a correct transform has been determined).

The perspective transformation is an affine transformation which converts the frames to be from the perspective of the sensor to be from a bird's eye perspective. That is, it converts the frames to be as if the sensor was located directly above the junction 10. The perspective transformation in some embodiments is based on image rectification using homography in turn based on a camera matrix of the sensor. The perspective transformation is based on the position and orientation of the sensor with respect to the junction 10.

At S211, the bird's eye view of the plurality of frames is used to estimate the position, speed, acceleration, and direction of the plurality of objects at the intersection 10 (collectively called the tracking data), in some embodiments, the bird's eye view of the plurality of frames is further used to determine the size of the object. This is obtained by tracking the plurality of objects across subsequent frames and knowing the frame rate of the sensor. The position, speed, acceleration, direction, and size are estimated using a trainable machine learning model.

At S213, the ground truth of the tracking data is derived from the received location telemetry data.

At S215, the ground truth of the tracking data is compared to the output of at least one of the three trainable machine learning models (the object detection model at S205, the object tracking model at S207, and the position, speed, acceleration, and direction estimation at S211). A loss is computed between the output of at least one of the three trainable models and the ground truth of the tracking data. Said loss is then used to further train at least one of the three trainable machine learning models, such as using backpropagation techniques. In the present instance, the loss is computed and backpropagated using either a single frame or a small set of consecutive frames, such as 10 or fewer frames. The machine learning models are therefore trained using an online (or quasi-online with small batch number) training regime. Notably, the ground truth and the output of the three trainable machine learning models are linked by linking the GPS timestamp and the sensor timestamp.

In some embodiments, the ground truth of detection data is derived from the received location telemetry data at S213 is compared to only the detection model at S205. In such embodiments, only the object detection model is trained using the ground truth of the detection data.

During inference, the method comprises the steps S203, S205, S207, S209, S211. The steps S201 receiving the location telemetry data and S213 comparing the ground truth to the outputs, are not necessary when performing the inference. However, in some embodiments, S201 and S213 are also performed during inference in order to further continuously improve the model.

In some embodiments, after deriving the position, speed, acceleration, and direction of the plurality of objects at S211, the method further comprises transmitting the tracking data to an external entity. In some embodiments, the external entity is other objects proximal to the intersection 10, in alternative embodiments, the external entity is traffic infrastructure. In some embodiments, the tracking data is transmitted via V2X or UWB. The tracking data may be used to implement at least one of warning systems, autonomous driving systems, and traffic light systems. However, the skilled person will recognise that any use of the tracking data is equally envisaged.

The provided training method, when deployed in a sensor system 20 of Figure 1, can be repeated as often as necessary. In particular, in some embodiments, the parameters of the trainable models are initialised using a pre-trained model, and then once the sensor system 20 is installed, the training method is performed so that the system 20 can learn the particularities of the intersection it is deployed near - for example, there may be some occlusions due to buildings. Additionally, further training may be necessary due to scenery changes, such as growing trees or foliage which in turn may occlude parts of the intersection 10.

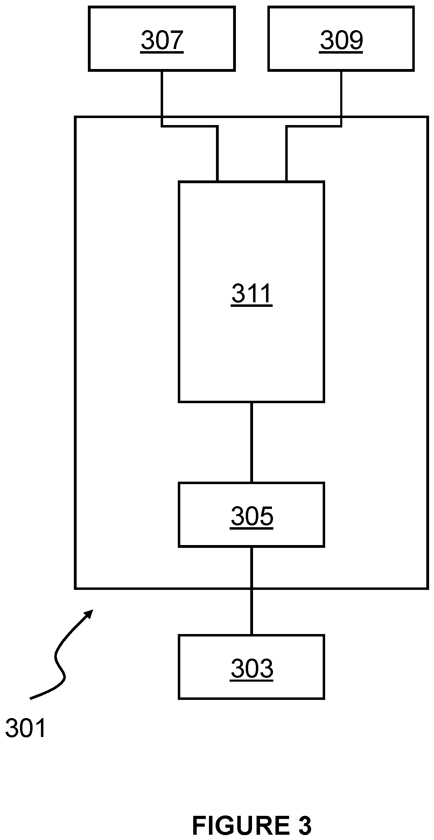

Turning to Figure 3, there is shown a schematic diagram of an example object detection and tracking system according to the present disclosure.

There is provided an object tracking system 301 comprising a sensor 303, a sensor receiver 305, a location telemetry receiver 307, a tracking data transceiver 309, and a processor 311.

The sensor 303 is configured to collect sensor data from the field of view of the sensor. The sensor 303 is further configured to transmit the sensor data to the sensor receiver 305. In some embodiments, the sensor 303 is co-located with the sensor receiver 305. In alternative embodiments, the sensor 303 transmits the sensor data to the sensor receiver 305 via telecommunication means.

The location telemetry receiver 307 is configured to receive location telemetry data from the plurality of objects at the intersection 10. In some embodiments the location telemetry receiver 307 is configured to receive at least one of V2X data or UWB data from an object in the field of view of the sensor.

The processor 311 is configured to execute the method described with respect to Figure 2.

The tracking data transceiver 309 is configured to transmit the tracking data to an external entity as described with respect to Figure 2. In some embodiments, the tracking data transceiver 309 additionally encompasses the functionality of the location telemetry receiver 307, i.e., the tracking data transceiver is configured to receive location telemetry data from the plurality of objects at the intersection 10. In some embodiments, the tracking data transceiver 309 is configured to transmit the tracking data to the external entity via at least one of V2X, UWB, WiFi^{®}, 3GPP standardised 4G LTE, 5G or 6G mobile cellular connectivity.

From reading the present disclosure, other variations and modifications will be apparent to the skilled person. Such variations and modifications may involve equivalent and other features which are known in the art, and which may be used instead of, or in addition to, features already described herein.

Although the appended claims are directed to particular combinations of features, it should be understood that the scope of the present disclosure also includes any novel feature or any novel combination of features disclosed herein either explicitly or implicitly or any generalisations thereof, whether or not it relates to the same subject matter as presently claimed in any claim and whether or not it mitigates any or all of the same technical problems as does the present disclosure.

Features which are described in the context of separate embodiments may also be provided in combination in a single embodiment. Conversely, various features which are, for brevity, described in the context of a single embodiment, may also be provided separately or in any suitable subcombination. The applicant hereby gives notice that new claims may be formulated to such features and/or combinations of such features during the prosecution of the present application or of any further applications derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer-implemented method of training an object detecting or tracking model, the object detecting or tracking model configured to receive sensor data from a sensor and track an object within a field of view of the sensor based on the sensor data; the method comprising:
receiving (S201) location telemetry data transmitted by an object within the field of view;
receiving (S203) sensor data from the sensor;
training the object detecting or tracking model, comprising:
detecting or tracking (S205, S207) the object in the field of view based on the sensor data using the object tracking model to obtain object data;
comparing (S215) the object data with the location telemetry data to determine a loss;
updating the object detecting or tracking model based on the loss.

2. The computer-implemented method of claim 1, wherein the sensor comprises at least one of: a camera, a lidar, and a radar.

3. The computer-implemented method of claim 1 or 2, wherein the location telemetry data is obtained from at least one of: satellite navigation and/or ultra-wideband impulse radio ranging.

4. The computer-implemented method of any preceding claim, further comprising transforming (S209) the location telemetry data into sensor coordinates based on the location and orientation of the sensor.

5. The computer-implemented method of any preceding claim, wherein tracking the object in the field of view comprises further comprises estimating (S211) object position, object speed, object acceleration, object size, and/or object direction.

6. The computer-implemented method of claim 5, wherein estimating (S211) object position, speed, acceleration, and/or direction comprises:
transforming the tracking data from sensor coordinates to bird's eye view coordinates;
estimating the position, speed, acceleration, and/or direction of the object based on the transformed tracking data.

7. The computer-implemented method of any preceding claim, wherein the sensor data is associated with the location telemetry data using clock synchronisation.

8. The computer-implemented method of any preceding claim, wherein the method is repeated until the loss reaches below a pre-determined threshold.

9. A computer-implemented method of detecting and tracking an object within a field of view of a sensor comprising:
receiving (S201) sensor data from the sensor; and
detecting and tracking (S205, S207) the object using an object detecting and tracking model trained using the computer-implemented method of any preceding claim to obtain object data.

10. The computer-implemented method of claim 9, wherein detecting and tracking the object comprises estimating (S211) object position, object speed, object acceleration, and/or object direction.

11. An object detecting and tracking system (301) comprising;
a sensor receiver (305) configured to receive sensor data from a field of view of the sensor;
a location telemetry data receiver (307) configured to receive location telemetry data from an object; and
one or more processors (311) configured to:
track the object in the field of view based on the sensor data using an object tracking model to obtain tracking data;
compare the tracking data with the location telemetry data to determine a loss; and
update the object tracking model based on the loss.

12. The object detecting and tracking system (301) of claim 11, further comprising at least one sensor (303) configured to collect sensor data from the field of view of the sensor and transmit the sensor data to the sensor receiver (305).

13. The object detecting and tracking system (301) of any of claims 11 or 12, further comprising a tracking data transceiver (309) configured to transmit the tracking data to an external entity.

14. The object detecting and tracking system (301) of any of claims 11 to 13, wherein:
the system (301) comprises the sensor (303), and the sensor (303) comprises at least one of: a camera, a radar, a lidar; and/or
the location telemetry data is obtained from at least one of: satellite navigation or ultra-wideband impulse radio ranging, wherein the ultra-wideband impulse radio ranging is optionally in combination with inertial measurement.

15. A non-transient machine readable medium comprising instructions for configuring one or more processors to perform the steps of:
receiving location telemetry data transmitted by an object within a field of view;
receiving sensor data from a sensor;
training an object tracking model, comprising:
tracking the object in the field of view based on the sensor data using the object tracking model to obtain tracking data;
comparing the tracking data with the location telemetry data to determine a loss;
updating the object tracking model based on the loss.

## Amended claims

### Amended claims in accordance with Rule 137(2) EPC.

1. A computer-implemented method of training an object detecting or tracking model, the object detecting or tracking model configured to receive sensor data from a sensor and track an object within a field of view of the sensor based on the sensor data; the method comprising:
receiving (S201), via ultra-wideband or V2X, location telemetry data transmitted by an object within the field of view;
receiving (S203) sensor data from the sensor;
training the object detecting or tracking model, comprising:
detecting or tracking (S205, S207) the object in the field of view based on the sensor data using the object tracking model to obtain object data;
comparing (S215) the object data with the location telemetry data to determine a loss;
updating the object detecting or tracking model based on the loss.

2. The computer-implemented method of claim 1, wherein the sensor comprises at least one of: a camera, a lidar, and a radar.

3. The computer-implemented method of claim 1 or 2, wherein the location telemetry data is obtained from at least one of: satellite navigation and/or ultra-wideband impulse radio ranging.

4. The computer-implemented method of any preceding claim, further comprising transforming (S209) the location telemetry data into sensor coordinates based on the location and orientation of the sensor.

5. The computer-implemented method of any preceding claim, wherein tracking the object in the field of view comprises further comprises estimating (S211) object position, object speed, object acceleration, object size, and/or object direction.

6. The computer-implemented method of claim 5, wherein estimating (S211) object position, speed, acceleration, and/or direction comprises:
transforming the tracking data from sensor coordinates to bird's eye view coordinates;
estimating the position, speed, acceleration, and/or direction of the object based on the transformed tracking data.

7. The computer-implemented method of any preceding claim, wherein the sensor data is associated with the location telemetry data using clock synchronisation.

8. The computer-implemented method of any preceding claim, wherein the method is repeated until the loss reaches below a pre-determined threshold.

9. A computer-implemented method of detecting and tracking an object within a field of view of a sensor comprising:
receiving (S201) sensor data from the sensor; and
detecting and tracking (S205, S207) the object using an object detecting and tracking model trained using the computer-implemented method of any preceding claim to obtain object data.

10. The computer-implemented method of claim 9, wherein detecting and tracking the object comprises estimating (S211) object position, object speed, object acceleration, and/or object direction.

11. An object detecting and tracking system (301) comprising;
a sensor receiver (305) configured to receive sensor data from a field of view of the sensor;
a location telemetry data receiver (307) configured to receive location telemetry data from an object via ultra-wideband or V2X; and
one or more processors (311) configured to:
track the object in the field of view based on the sensor data using an object tracking model to obtain tracking data;
compare the tracking data with the location telemetry data to determine a loss; and
update the object tracking model based on the loss.

12. The object detecting and tracking system (301) of claim 11, further comprising at least one sensor (303) configured to collect sensor data from the field of view of the sensor and transmit the sensor data to the sensor receiver (305).

13. The object detecting and tracking system (301) of any of claims 11 or 12, further comprising a tracking data transceiver (309) configured to transmit the tracking data to an external entity.

14. The object detecting and tracking system (301) of any of claims 11 to 13, wherein:
the system (301) comprises the sensor (303), and the sensor (303) comprises at least one of: a camera, a radar, a lidar; and/or
the location telemetry data is obtained from at least one of: satellite navigation or ultra-wideband impulse radio ranging, wherein the ultra-wideband impulse radio ranging is optionally in combination with inertial measurement.

15. A non-transient machine readable medium comprising instructions for configuring one or more processors to perform the steps of:
receiving, via ultra-wideband or V2X, location telemetry data transmitted by an object within a field of view;
receiving sensor data from a sensor;
training an object tracking model, comprising:
tracking the object in the field of view based on the sensor data using the object tracking model to obtain tracking data;
comparing the tracking data with the location telemetry data to determine a loss;
updating the object tracking model based on the loss.
